Europäisches Patentamt

European Patent Office

Office européen des brevets

(19)

(11) Numéro de publication : **0 061 384**
**B1**

(12)                          **FASCICULE DE BREVET EUROPÉEN**

(45) Date de publication du fascicule du brevet :
**17.10.84**

(51) Int. Cl.³ : **G 11 B   7/08**

(21) Numéro de dépôt : **82400421.2**

(22) Date de dépôt : **09.03.82**

(54) **Senseur optique d'asservissement de focalisation.**

(30) Priorité : **24.03.81 FR 8105854**

(43) Date de publication de la demande :
**29.09.82 Bulletin 82/39**

(45) Mention de la délivrance du brevet :
**17.10.84 Bulletin 84/42**

(84) Etats contractants désignés :
**CH DE GB IT LI NL SE**

(56) Documents cités :
**FR-A- 2 313 716**
**FR-A- 2 325 987**
**US-A- 3 971 002**
**US-A- 3 983 317**

(73) Titulaire : **THOMSON-CSF**
**173, Boulevard Haussmann**
**F-75379 Paris Cedex 08 (FR)**

(72) Inventeur : **Lacotte, Jean-Pierre**
**THOMSON-CSF SCPI 173, bld Haussmann**
**F-75379 Paris Cedex 08 (FR)**
Inventeur : **Fichot, Bernard**
**THOMSON-CSF SCPI 173, bld Haussmann**
**F-75379 Paris Cedex 08 (FR)**
Inventeur : **Troude, Gilles**
**THOMSON-CSF SCPI 173, bld Haussmann**
**F-75379 Paris Cedex 08 (FR)**

(74) Mandataire : **Wang, Pierre et al**
**THOMSON-CSF SCPI 173, Bld Haussmann**
**F-75379 Paris Cedex 08 (FR)**

Jouve, 18, rue St-Denis, 75001 Paris, France

## Description

La présente invention concerne un senseur optique, fournissant les signaux d'erreur de focalisation, d'un système optique sur une surface. Ces signaux sont utilisés pour commander le tirage du système optique, qui est ainsi asservi à une focalisation correcte.

Cette invention s'applique plus particulièrement à la lecture optique d'informations sur un support mobile, notamment un vidéodisque.

Pour ces applications la profondeur de champ du système optique de focalisation est de l'ordre du micron et il est donc indispensable de corriger les erreurs de tirage du système optique, dues au mouvement du support.

Il est connu par les brevets français N° 2271590 et son addition N° 2270296, d'utiliser une partie du faisceau optique réfléchi par le support pour obtenir après passage de ce faisceau dans l'objectif de focalisation un faisceau astigmate, grâce à une lentille cylindrique. Quatre cellules accolées formant un carré sont placées dans le plan de moindre diffusion, où se trouve une tache lumineuse circulaire, si la focalisation est correcte. En cas de défocalisation cette tache se déforme et cette déformation est détectée par les signaux des 4 cellules. Un signal d'erreur est obtenu qui agit après amplification sur le moteur de commande du tirage.

Suivant le brevet d'addition N° 2270296 déjà cité, il est possible d'obtenir également le signal de lecture à partir des signaux fournis par les cellules.

La présente invention présente l'avantage par rapport à cet art antérieur, de réaliser le système produisant l'astigmatisme et la réflexion du faisceau réfléchi, par le support par un seul élément optique qui est un prisme. Ceci permet une mise en œuvre simplifiée par rapport à l'art antérieur.

Brièvement c'est un senseur optique d'asservissement de focalisation d'un faisceau optique transmis par un objectif vers la surface réfléchissante d'un support mobile, la position dudit faisceau optique qui émerge dudit objectif étant convergente en un point, ledit senseur comprenant un élément optique astigmatiseur de la fraction de rayonnement retransmise par ledit objectif après réflexion dudit faisceau optique sur ladite surface réfléchissante, des moyens photodétecteurs recueillant ladite fraction de rayonnement astigmatisée, afin de déduire de la forme prise par la tache lumineuse éclairant lesdits moyens un signal électrique représentatif de l'écart entre ledit point de convergence et ladite surface réfléchissante et des moyens d'asservissement commandés par ledit signal électrique, afin d'annuler ledit écart, caractérisé en ce que ledit élément optique astigmatiseur est un prisme en matériau réfringent ayant une première facette plane agencée pour réfléchir vers ledit objectif un faisceau de vergence non nulle émis par une source et pour recueillir ladite fraction de rayonnement retransmise et une seconde facette plane d'où émerge ladite fraction de rayonnement astigmatisée.

D'autres caractéristiques et avantages ressortiront de la description qui va suivre, illustrée par les figures qui représentent :

figure 1 un schéma optique du senseur suivant l'invention ;

figure 2 le schéma de réception et d'asservissement.

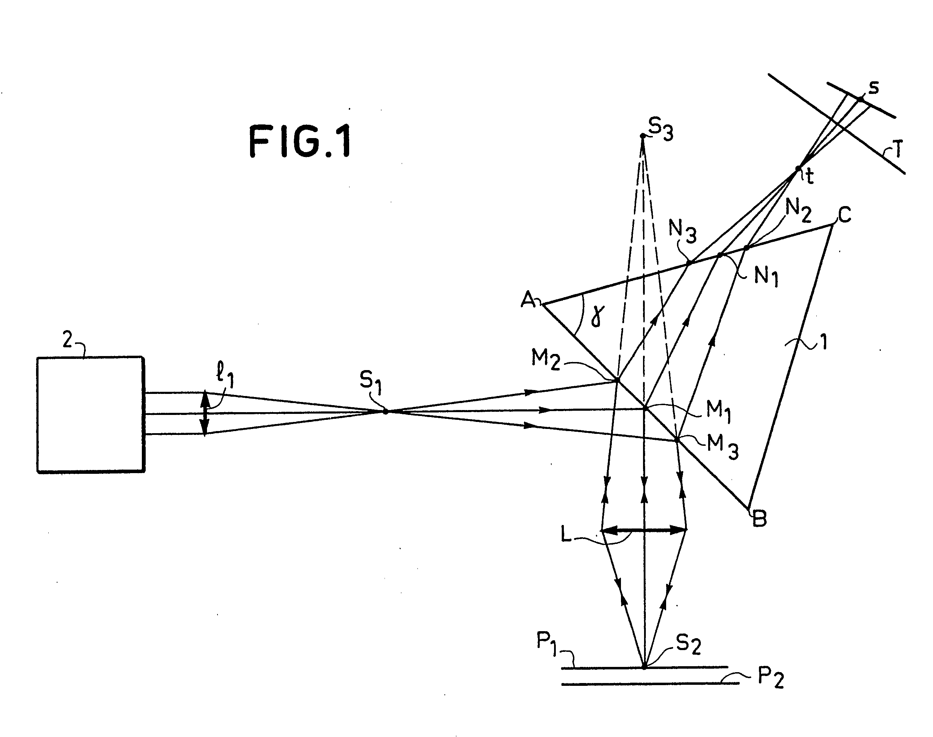

La figure 1 représente le schéma optique du senseur suivant l'invention.

Une source optique 2 préférentiellement un laser, fournit un faisceau parallèle qui est focalisé au point $S_1$ par un objectif $I_1$. Le faisceau divergent issu de $S_1$ est incident sur un prisme 1. A, B et C représentent les sommets du triangle de la section principale du prisme 1.

Sur la figure 1 on a représenté les points d'incidence sur le prisme $M_1$, $M_2$ et $M_3$ du rayon axial et des deux rayons extrêmes situés dans le plan de section principale de prisme. Une partie du faisceau se réfléchit sur la face AB, tombe sur l'objectif de focalisation L, qui forme l'image du point $S_1$ en $S_2$. Pour le bon fonctionnement de la lecture, il faut que le point $S_2$ se trouve dans le plan de mémoire $P_1$. Dans ce cas le faisceau réfléchi par le plan mémoire $P_1$ subit un retour inverse en repassant par l'objectif L. Une partie en retour inverse du faisceau est réfléchi par la face AB et peut être utilisée éventuellement pour la lecture. Ce système de lecture de l'information n'est pas représenté, étant connu de l'art antérieur.

Sur la figure est marqué le point de focalisation virtuel $S_3$ du faisceau réfléchi par le support. Ce point $S_3$ est le symétrique du point $S_1$ par rapport à la face AB du prisme.

Une partie du faisceau réfléchi par le support entre dans le prisme 1 par la face AB, et l'autre partie s'y réfléchit. La partie transmise dans le prisme 1 sort par la face AC. Sur la figure on a représenté trois rayons $M_1N_1$, $M_2N_2$ et $M_3N_3$. Le faisceau sortant par la face AC est astigmate et il est connu qu'un tel faisceau passe sensiblement par deux lignes focales t et s appelées focale tangentielle et sagittale. L'une étant perpendiculaire au plan de section principal et l'autre dans ce plan. A égale distance des deux focales t et s se trouve le plan T appelé plan du cercle de moindre diffusion. C'est dans ce plan T, perpendiculaire au rayon moyen que se trouvent les cellules accolées.

Sur la figure 1 on a représenté un plan mémoire $P_2$ déplacé par rapport au point de focalisation $S_2$. Dans ce cas le faisceau réfléchi n'est plus caractéristique du retour inverse et la tache lumineuse dans le plan T sera déformée.

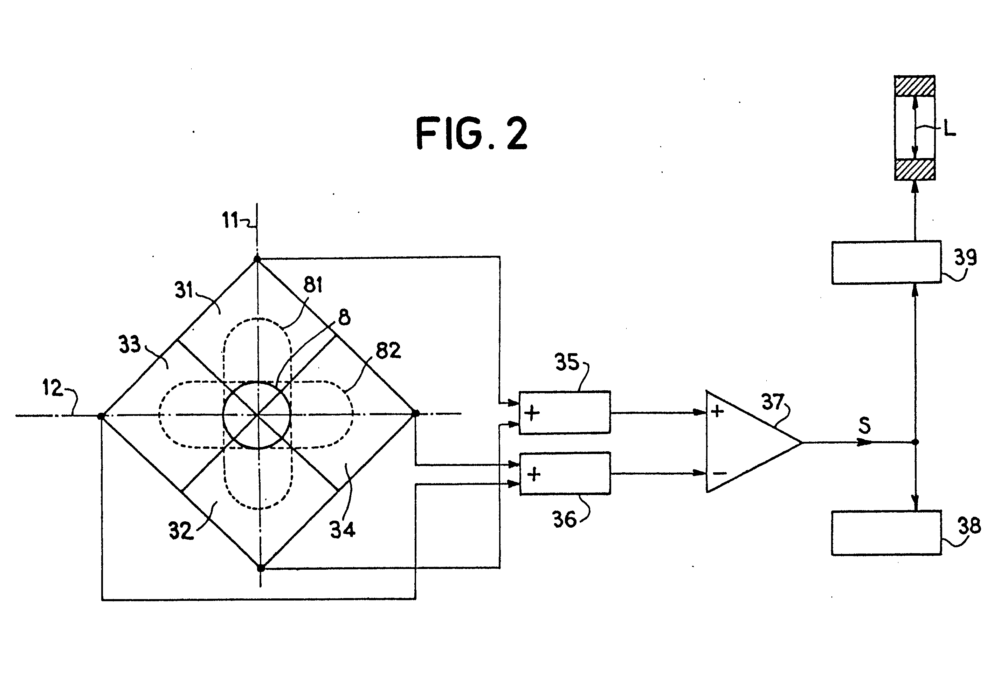

La figure 2 montre schématiquement le dispositif d'asservissement, analogue à celui décrit dans le brevet français N° 2271590 déjà cité.

Les cellules carrées 31, 32, 33 et 34 sont accolées pour former un grand carré. La diagonale 12 de ce grand carré est placée dans le plan de section principale du prisme 1. Pour une focalisation parfaite de l'objectif L sur le plan mémoire, la tache lumineuse 8 est un cercle.

Pour une défocalisation de l'objectif L, la tache s'allonge 82, suivant la diagonale 12 ou 81 suivant l'autre diagonale 11, suivant que le point S₂ se trouve en avant ou en arrière du plan mémoire.

Les signaux fournis par les cellules opposées 31 et 32 sont additionnés dans un circuit 35 et les signaux fournis par les cellules 32 et 33 sont additionnées dans un circuit 36.

Les signaux de sortie des circuits 35 et 36 sont appliqués à un amplificateur différentiel 37, qui fournit le signal de correction S.

La valeur de ce signal S peut être lue sur un appareil de mesure 38. Finalement ce signal S est appliqué au moteur de commande du tirage de l'objectif L. Les flèches de la figure 2 montrent les deux sens du mouvement de l'objectif L suivant le signe de S.

L'optimisation du système se fait par exemple, en s'imposant une valeur de la distance d'astigmatisme ts (figure 1). On prend généralement des angles d'incidence de 45° sur la face AB du prisme 1. Connaissant le point de convergence S₃ du faisceau réfléchi et la distance E = M₁A on peut calculer l'angle du prisme ou on se fixe cet angle et l'on détermine E. Ces calculs sur des faisceaux astigmates à travers des dioptres plans sont décrits dans tous les traités d'optique géométrique.

Finalement on a écrit un nouveau senseur pour l'asservissement d'un objectif, pour permettre la lecture d'une mémoire optique et plus particulièrement un vidéodisque.

## Revendications

1. Senseur optique d'asservissement de focalisation d'un faisceau optique transmis par un objectif (L) vers la surface réfléchissante (P₁) d'un support mobile, la position dudit faisceau optique qui émerge dudit objectif (L) étant convergente en un point (S₂), ledit senseur comprenant un élément optique (1) astigmatiseur de la fraction de rayonnement retransmise par ledit objectif (L) après réflexion dudit faisceau optique sur ladite surface réfléchissante (P₁), et des moyens photodétecteurs recueillant ladite fraction de rayonnement astigmatisée, afin de déduire de la forme prise par la tache lumineuse (8, 81, 82) éclairant lesdits moyens un signal électrique (S) représentatif de l'écart entre ledit point de convergence (S₂) et ladite surface réfléchissante (P₁) et des moyens d'asservissement (39) commandés par ledit signal électrique, afin d'annuler ledit écart, caractérisé en ce que ledit élément optique astigmatiseur est un prisme en matériau réfringent ayant une première facette plane (AB) agencée pour réfléchir vers ledit objectif (L) un faisceau de vergence non nulle émis par une source (S₁) et pour recueillir ladite fraction de rayonnement retransmise et une seconde facette plane (AC) d'où émerge ladite fraction de rayonnement astigmatisée.

2. Senseur selon la revendication 1, caractérisé en ce que la source (S₁) est ponctuelle et comporte un laser (2).

3. Senseur selon l'une quelconque des revendications précédentes, caractérisé en ce que lesdits moyens photodétecteurs comportent quatre cellules photoélectriques (31, 32, 33 et 34) accolées dans un plan de détection qu'elles subdivisent en quatre quadrants.

4. Senseur selon l'une quelconque des revendications précédentes, caractérisé en ce que ladite surface réfléchissante comporte des éléments d'information qui interagissent optiquement avec ledit faisceau utilisé comme moyen de lecture de ladite information.

## Claims

1. Optical sensor for the focus control of a an optical beam transmitted by an objective (L) towards the reflecting surface (P₁) of a movable carrier, the position of the optical beam emerging from said objective (L) being convergent in a point (S₂), said sensor comprising an optical member (1) rendering astigmatic the fraction of radiation retransmitted by said objective (L) after reflection of said optical beam on said reflecting surface (P₁), and photodetector means receiving said fraction of radiation which has been made astigmatic, in order to derive from the shape taken by the light spot (8, 81, 82) illuminating said means an electric signal (S) representing the deviation of said convergence point (S₂) from said reflecting surface (P₁) as well as control means (39) controlled by said electrical signal in a manner to reduce said deviation to zero, characterized in that said optical member for making astigmatic is a prism of refringent material having a first plane facet (AB) arranged for reflecting a beam of non-zero vergency emitted by a source (S₁) towards said objective (L) and for receiving said retransmitted fraction of radiation, and a second plane facet (AC) wherefrom said fraction of radiation which has been rendered astigmatic emerges.

2. Sensor according to claim 1, characterized in that said source (S₁) is a point source and comprises a laser (2).

3. Sensor according to any of the preceding claims, characterized in that said photodetector means comprise four photocells (31, 32, 33 and 34) joining each other within a detection plane which they divide into four quadrants.

4. Sensor according to any of the preceding claims, characterized in that said reflecting surface comprises information elements optically interacting with said beam used as means for reading said information.

## Ansprüche

1. Optischer Sensor zur Nachregelung der Fokussierung eines optischen Bündels, das durch ein Objektiv (L) gegen die reflektierende Ober-

fläche (P$_1$) eines beweglichen Trägers hindurchtritt, wobei die Position des aus dem genannten Objektiv (L) austretenden Bündels in einem Punkt (S$_2$) konvergiert und der Sensor ein optisches Element (1) enthält, welches denjenigen Bruchteil der Strahlung astigmatisch macht, der erneut durch das genannte Objektiv (L) nach Reflexion des optischen Bündels an der genannten reflektierenden Oberfläche (P$_1$) hindurchgeht, sowie Photodetektormittel umfaßt, welche den genannten, astigmatisch gemachten Bruchteil der Strahlung aufnehmen, um aus der Form, die der die genannten Mittel beleuchtende Lichtfleck (8, 81, 82) angenommen hat, ein elektrisches Signal (S) abzuleiten, das die Abweichung zwischen dem Konvergenzpunkt (S$_2$) und der reflektierenden Oberfläche (P$_1$) darstellt, sowie eine durch das genannte elektrische Signal gesteuerte Nachregelung (39) umfaßt, welche die genannte Abweichung zum Verschwinden bringt, dadurch gekennzeichnet, daß das genannte, astigmatisch machende optische Element ein Prisma aus lichtbrechendem Material ist, welches eine erste ebene Fläche (AB) besitzt, die zum Reflektieren eines von einer Quelle (S$_1$) ausgesendeten Bündels mit nicht verschwindender Vergenz zu dem genannten Objektiv (L) hin sowie zum Entgegennehmen des genannten, wieder hindurchgehenden Strahlungsbruchteils angeordnet ist, und eine zweite ebene Fläche (AC) besitzt, aus welcher der genannte, astigmatisch gemachte Strahlungsbruchteil austritt.

2. Sensor nach Anspruch 1, dadurch gekennzeichnet, daß die Quelle (S$_1$) punktförmig ist und einen Laser (2) umfaßt.

3. Sensor nach einem der vorstehenden Ansprüche, dadurch gekennzeichnet, daß die genannten Photodetektormittel vier photoelektrische Zellen (31, 32, 33 und 34) umfassen, welche in einer Detektionsebene aneinandergefügt sind, die sie in vier Quadranten teilen.

4. Sensor nach einem der vorstehenden Ansprüche, dadurch gekennzeichnet, daß die reflektierende Oberfläche Informationselemente umfaßt, die optisch mit dem genannten Bündel in Wechselwirkung treten, welches als Mittel zum Auslesen der genannten Information verwendet wird.

FIG.1

0 061 384

FIG. 2

2